# EUROPEAN PATENT SPECIFICATION

(11) **EP 1 291 273 B1**
(45) Date of publication and mention of the grant of the patent: **02.02.2005**
(21) Application number: 02078728.9
(22) Date of filing: 10.09.2002
(51) Int. Cl.: B62J 6/04, B62J 15/04

(54) **Mud flap**
Schmutzfänger
Bavette de garde-boue

(30) Priority: 11.09.2001 NL 1018929
(43) Date of publication of application: 12.03.2003
(73) Proprietor: Spanninga Metaal B.V., 8501 MK Joure (NL)
(72) Inventor: Vellinga, Jacob, 8502 AL Joure (NL)
(74) Representative: Dorna, Peter

(56) References cited:
- BE-A- 419 599
- DE-A- 3 129 394
- DE-B- 1 004 951
- FR-A- 2 765 852
- GB-A- 2 248 714

## Description

The invention relates to a mud flap for attachment to the rear mudguard of a bicycle.

Modern bicycles are generally fitted with mudguards, which are comparatively small in length in comparison with mudguards that were previously used. The problem of these mudguards is that the area for catching splashing water is comparatively small, and in order to compensate for this a mud flap is attached to the free end of the mudguard (see for instance DE-B-1004951) for catching splashing water in the case of rain and the like so as to protect traffic coming up from behind against any nuisance.

Furthermore it is a legal requirement that a bicycle be fitted with a rear light, which must emit a specified amount of light both to the rear and to the sides. It is usual to fit the rear light with a reflector which is integrated therein.

In many cases, such a rear light is mounted on the rear end of a luggage carrier. A problem that occurs in such cases is that in particular the emission of light of the rear light to the sides, but in some cases even to the rear is blocked entirely or in part by saddlebags that are used and/or by overhanging luggage on the luggage carrier. Another drawback in such cases is the fact that such a luggage carrier-mounted rear light does not indicate the rear boundary of the bicycle, which may be objectionable in traffic.

According to the invention, the mud flap is fitted with a rear light.

The use of the construction according to the invention makes it possible to fit the rear light at a lower location and also further to the rear on the bicycle than in those cases where the rear light is mounted on the luggage carrier. Consequently, the rear light will generally be mounted at a location where it is more visible, whilst it is furthermore possible to mount the rear light at least substantially near the rear boundary of the bicycle.

If the rear light is correctly mounted with respect to the mud flap, the mud flap can furthermore function as a sort of bumper to protect the rear light.

The invention further relates to a rear mudguard of a bicycle comprising a mud flap which forms an integral part of the rear mudguard, in which the mud flap is fitted with a rear light. In addition to the advantages of the mud flap according to the invention as described above, which advantages also apply to the rear mudguard according to the invention, the integrated character of rear mudguard and mud flap moreover has the advantage that the overall production costs will be lower, or at least can be lower, whilst furthermore the mud flap need not be separately mounted on the rear mudguard.

Finally, the invention also relates to a bicycle fitted with a mud flap or a rear mudguard according to the invention.

The invention will be explained in more detail hereinafter by means of a few embodiments of the invention which are schematically shown in the accompanying Figures.

Figure 1 is a top plan view of a mud flap fitted to the end of a mudguard, which forms a first embodiment of the invention.

Figure 2 is a side elevation of Figure 1.

Figure 3 is a top plan view of a second embodiment of a mud flap according to the invention.

Figure 4 is a side elevation of Figure 3.

Figure 5 is a top plan view of a third embodiment of a mud flap according to the invention.

Figure 6 is a side elevation of Figure 5.

Figure 7 is a side elevation of a mudguard with an integrated mud flap.

Figure 8 shows the detail VIII in Figure 7.

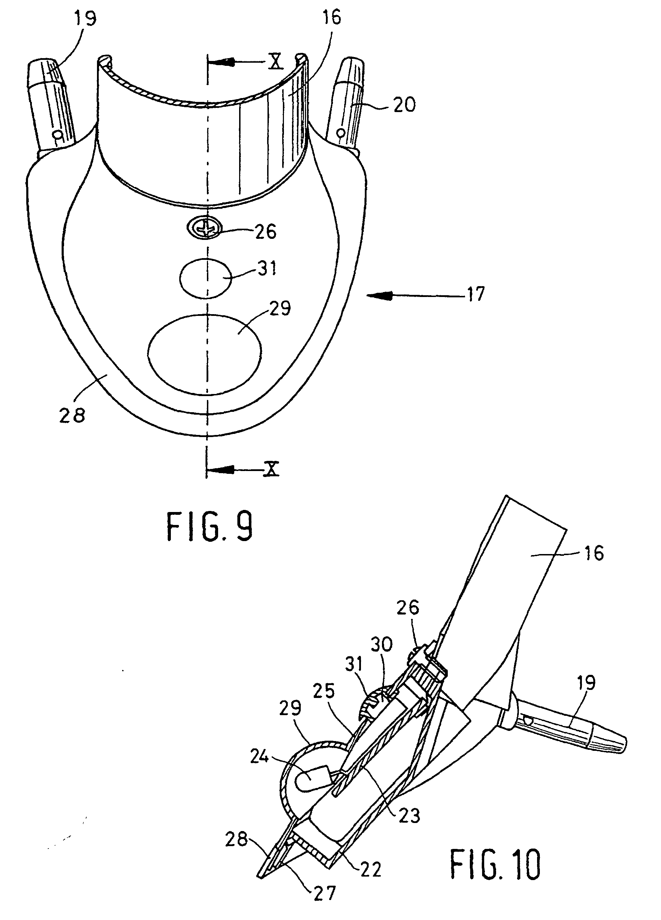

Figure 9 is a top plan view of the mudguard according to Figure 7, showing the area where the integrated mud flap is present.

Figure 10 is a cross-sectional view along the line X-X in Figure 9.

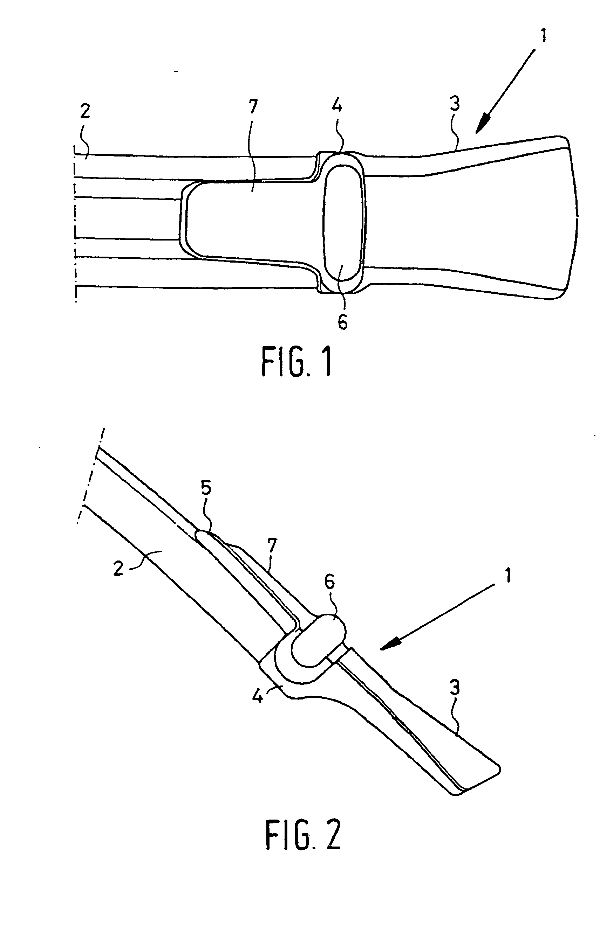

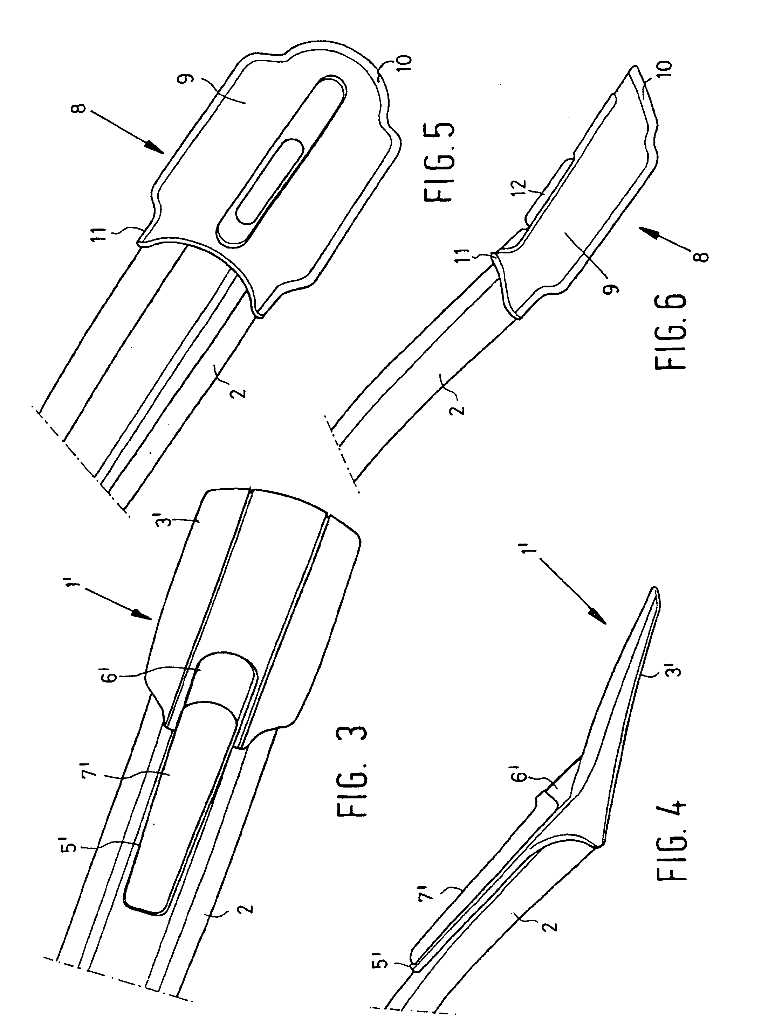

In use, the mud flap 1 that is shown in Figures 1 and 2 is attached to the end of a rear mudguard 2. Attachment of said mud flap 1 and also of the mud flaps that are shown in Figures 3-6 can take place by means of suitable means of attachment (not shown), such as screws, clamping brackets and/or by accommodating the free end of the mudguard 2 into a corresponding recess in the mud flap 1 with a clamped fit.

The mud flaps according to the various embodiments are preferably made of a slightly elastic material, for example a suitable plastic.

As Figures 1 and 2 show, the mud flap 1 comprises a more or less wing-shaped free end 3, which has a curved configuration, seen in cross-sectional view. The width of said wing 3 gradually decreases from the free end thereof in the direction of the mudguard to which the mud flap 1 is attached.

A ridge 4 extending transversely to the longitudinal direction of the wing 3 joins the end of the wing 3 remote from the free end of the wing 3, which ridge abuts against the free end of the mudguard 2 with its one boundary surface. At the side of the ridge 4 remote from the wing 3, a finger-shaped part 5 extending in the longitudinal direction of the mud flap 1 joins the ridge 4, which finger-shaped part 5 abuts against the mudguard 2 in the position in which the mud flap 1 is mounted on the mudguard.

A chamber is recessed in the ridge 4, which chamber is covered by a cover 6 of spherical section, which is made of a transparent material.

One or more light sources are arranged under the cover, in the chamber that is recessed in the ridge 4. The slightly curvilinear configuration of the cover 6 in a direction transversely to the longitudinal direction of the mudguard enables the light source(s) that are arranged under the cover to emit light over the required minimum angular range of ± 110°.

As is further indicated in Figures 1 and 2, a recess may be formed in the finger-shaped part 5, in which recess a decorative strip or reflector 7 may be present.

The mud flap that is shown in Figures 3 and 4 corresponds in large measure to the mud flap as described above and shown in Figures 1 and 2, and consequently like parts are indicated by the same numerals with the addition of an accent.

The main difference between the construction according to Figures 3 and 4 and the construction according to Figures 1 and 2 is that the construction according to Figures 3 and 4 does not comprise a ridge 4 and that the wing 3' gradually and directly merges into the elongated part 5'.

Furthermore, the transparent cover 6' does not extend transversely to the longitudinal direction of the mud flap 1' but substantially parallel to the longitudinal direction of the mud flap 1'. Since the cover 6' projects above the upper boundary surface of the mud flap 1' in this embodiment as well, an adequate emission of light over the desired angular range can be obtained in this embodiment as well when the light source(s) present under the cover is (are) on.

Another difference is that the elongated part 5' and the wing 3' of the embodiment according to Figures 3 and 4 include an obtuse angle with each other, whereas said parts are in line in the embodiment according to Figures 1 and 2.

The mud flap 8 that is shown in Figures 5 en 6 substantially consists of an elongated, shell-shaped part 9 of curved section, which merges into a narrower, rounded part 10 at its free end. The other end 11 is made up of a narrower (in comparison with the shell-shaped part 9) part of curved section, whose contour has been adapted to conform to the shape of the mudguard 2 against which said part 11 abuts.

A chamber for housing one or more light sources is recessed in the shell-shaped part. Said chamber is covered by a cover 12 of a transparent material, which projects above the mud flap. Also in this embodiment the cover 12 projects above the mud flap to a sufficient degree to ensure that light will be emitted over a sufficiently large angular range when the light source(s) is (are) on.

The light source(s), for example an LED, may or may not be mounted on a printed circuit board in the chamber that is recessed in the mud flap, or on the aforesaid transparent cover. The supply of power to the light source(s) may take place by means of batteries, which may also be accommodated in a suitable recess in the mud flap. The supply of power to the light source may also take place via wires from a dynamo, of course. All this can take place in a manner which is usual for the known rear lights.

Furthermore, optical elements may be arranged in the chamber for the light source(s) that has been formed in the mud flap and/or in the cover, which elements function to spread the light to a sufficient degree in accordance with the legal requirements.

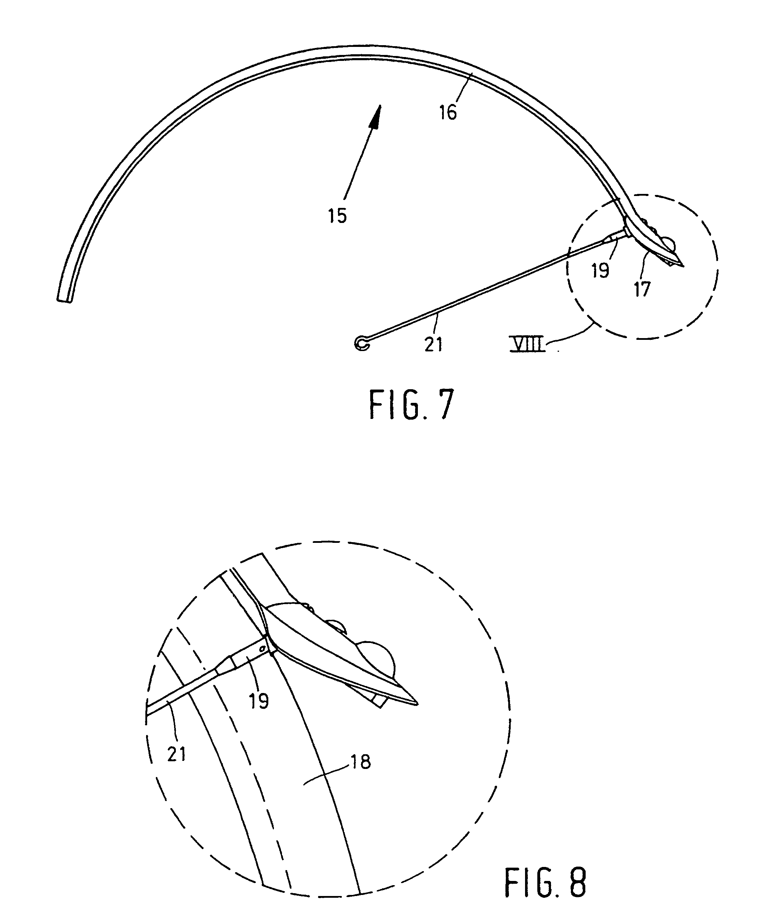

Figure 7 shows a rear mudguard 15 comprising a mudguard member 16 and a mud flap 17 integral therewith, which mud flap extends at an outward angle with respect to the mudguard member 16. The mud flap 17 is also wider than the mudguard member 16. The rear mudguard 15 is provided with two brackets 19, 20 at the location of the mud flap 17, which brackets extend on either side of the rear wheel 18 (shown in Figure 8) in the direction of the hub of the rear wheel 18. The attachment of the rear mudguard 15 to the remaining part of the bicycle in question (not shown) inter alia takes place by means of two forked arms, of which only the arm 21, one end of which is connected to the brackets 19, is shown in Figures 7 and 8.

A box 22 is formed in a hole in the mud flap 17. The box 22 functions as the housing for a printed circuit board 23 fitted with an LED 24. Furthermore, a battery (not shown) and a switch mounted on the printed circuit board 23 are present in the box 22. The box 22 is closed by means of a transparent cover plate 25 of plastic material, which is fixed to the box 22 by means of a cross-slotted screw 26. The cover plate 25 is provided with a flanged edge 27 along part of its circumference, which flanged edge is clampingly inserted under a circumferential edge 28 of the mud flap 17 from the inside.

At the location of the LED 24, the cover plate 25 exhibits an outward convexity 29, as a result of which the light from the LED 24 will be visible not only from the rear but also from the sides. A switching cap 31 of a flexible plastic material is arranged in a hole 30 in the cover plate 25, above the convexity 29. Disposed directly below the switching cap is the aforesaid switch (not shown). The switch can be operated through deforming depression of the switching cap, thus turning the LED 24 on and off.

Although the mud flap 17 as described above is integral with the mudguard member 16, it is also possible within the framework of the invention to configure a mud flap, such as the mud flap 17, as a separate part suitable for attachment to the lower side of a mudguard portion. Reference is made to the first, second and third embodiments as described with reference to Figures 1 - 6 for possible ways of attachment. Conversely, it is also possible within the framework of the invention to design the mud flap according to the first, second and third embodiments as an integral part of the associated mudguard.

## Claims

1. A mud flap for attachment to the end of the rear mudguard of a bicycle, **characterized in that** the mud flap is fitted with a rear light.

2. A mud flap according to claim 1, **characterized in that** a chamber is formed in the mud flap for accommodating one or more light sources, which chamber is covered by a cover of a transparent material, which projects above the mud flap surface.

3. A mud flap according to claim 1 or 2, **characterized in that** the mud flap comprises an elongated part intended for abutment against the end of the mudguard in the mounted position of the mud flap, as well as a wing-shaped part, which extends free from the mudguard in the mounted position of the mud flap.

4. A mud flap according to claim 2, **characterized in that** the cover extends transversely to the longitudinal direction of the mud flap.

5. A mud flap according to any one of the preceding claims 2 or 4, **characterized in that** the cover extends in the longitudinal direction of the mud flap.

6. A mud flap according to any one of the preceding claims, **characterized in that** the part of the mud flap that projects from the mudguard in the position in which the mud flap is mounted on a mudguard has a curved configuration, seen in cross-sectional view.

7. A mud flap according to any one of the preceding claims, **characterized in that** the mud flap is provided with an operating button for the rear light.

8. A rear mudguard of a bicycle comprising a mud flap which forms an integral part of the rear mudguard, **characterized in that** the mud flap is fitted with a rear light.

9. A bicycle fitted with a mud flap according to any one of the claims 1 - 7 or with a rear mudguard according to claim 8.

## Patentansprüche

1. Schmutzfänger zur Befestigung am Ende des hinteren Schutzblechs eines Fahrrades, **dadurch gekennzeichnet, dass** der Schmutzfänger mit einer Schlussleuchte ausgerüstet ist.

2. Schmutzfänger nach Anspruch 1, **dadurch gekennzeichnet, dass** eine Kammer im Schmutzfänger zur Aufnahme einer oder mehrerer Lichtquellen ausgebildet ist, wobei die Kammer mit einer Abdeckung aus einem transparenten Material abgedeckt ist, welche sich über die Schmutzfängeroberfläche erstreckt.

3. Schmutzfänger nach Anspruch 1 oder 2, **dadurch gekennzeichnet, dass** der Schmutzfänger ein in der befestigten Position des Schmutzfängers zum Anliegen am Ende des Schutzblechs vorgesehenes verlängertes Teil sowie ein flügelförmiges Teil, das sich in der befestigten Position des Schmutzfängers frei vom Schutzblech erstreckt, umfasst.

4. Schmutzfänger nach Anspruch 2, **dadurch gekennzeichnet, dass** sich die Abdeckung quer zur Längsrichtung des Schmutzfängers erstreckt.

5. Schmutzfänger nach einem der vorherigen Ansprüche 2 oder 4, **dadurch gekennzeichnet, dass** sich die Abdeckung in der Längsrichtung des Schmutzfängers erstreckt.

6. Schmutzfänger nach einem der vorherigen Ansprüche, **dadurch gekennzeichnet, dass** der Teil des Schmutzfängers, der in der Position, in der der Schmutzfänger an einem Schutzblech befestigt ist, über das Schutzblech hinausragt, einen in der Querschnittsansicht betrachteten gebogenen Aufbau aufweist.

7. Schmutzfänger nach einem der vorherigen Ansprüche, **dadurch gekennzeichnet, dass** am Schmutzfänger ein Betätigungsknopf für das Rücklicht vorgesehen ist.

8. Hinteres Schutzblech für ein Fahrrad, umfassend einen Schmutzfänger, der ein integrales Teil des hinteren Schutzblechs bildet, **dadurch gekennzeichnet, dass** der Schmutzfänger mit einer Schlussleuchte ausgerüstet ist.

9. Mit einem Schmutzfänger nach einem der Ansprüche 1 bis 7 oder mit einem hinteren Schutzblech nach Anspruch 8 ausgerüstetes Fahrrad.

## Revendications

1. Bavette de garde-boue destinée à être fixée à l'extrémité du pare-boue arrière d'une bicyclette, **caractérisée en ce que** la bavette de garde-boue est équipée d'une lumière arrière.

2. Bavette de garde-boue selon la revendication 1, **caractérisée en ce qu'**une chambre est formée dans la bavette de garde-boue pour loger une ou plusieurs source(s) de lumière, laquelle chambre est recouverte par un couvercle en matériau transparent, qui se projette au-dessus de la surface de la bavette de garde-boue.

3. Bavette de garde-boue selon la revendication 1 ou 2, **caractérisée en ce que** la bavette de garde-boue comprend une partie allongée destinée à être en butée contre l'extrémité du pare-boue dans la position montée de la bavette de garde-boue, ainsi qu'une partie en forme d'aile, qui s'étend librement depuis le pare-boue dans la position montée de la bavette de garde-boue.

4. Bavette de garde-boue selon la revendication 2, **caractérisée en ce que** le couvercle s'étend transversalement à la direction longitudinale de la bavette de garde-boue.

5. Bavette de garde-boue selon l'une quelconque des revendications précédentes 2 à 4, **caractérisée en ce que** le couvercle s'étend dans la direction longitudinale de la bavette de garde-boue.

6. Bavette de garde-boue selon l'une quelconque des revendications précédentes, **caractérisée en ce que** la partie de la bavette de garde-boue, qui se projette depuis le pare-boue dans la position dans laquelle la bavette de garde-boue est montée sur un pare-boue, présente une configuration incurvée, vue en coupe transversale.

7. Bavette de garde-boue selon l'une quelconque des revendications précédentes, **caractérisée en ce que** la bavette de garde-boue est dotée d'un bouton d'actionnement pour la lumière arrière.

8. Pare-boue arrière d'une bicyclette comprenant une bavette de garde-boue qui fait partie intégrante du pare-boue arrière, **caractérisé en ce que** la bavette de garde-boue est équipée d'une lumière arrière.

9. Bicyclette équipée d'une bavette de garde-boue selon l'une quelconque des revendications 1 à 7 ou d'un pare-boue arrière selon la revendication 8.
